(19) Europäisches Patentamt
European Patent Office
Office européen des brevets

(11) **EP 4 263 149 B1**

(12) **EUROPÄISCHE PATENTSCHRIFT**

(45) Veröffentlichungstag und Bekanntmachung des Hinweises auf die Patenterteilung:
**12.11.2025  Patentblatt 2025/46**

(21) Anmeldenummer: **21810976.7**

(22) Anmeldetag: **11.11.2021**

(51) Internationale Patentklassifikation (IPC):
**B25J 9/16** (2006.01)          **B25J 13/08** (2006.01)

(52) Gemeinsame Patentklassifikation (CPC):
**B25J 9/1676; B25J 9/1607; B25J 9/1633;**
**B25J 9/1643; B25J 9/1664; B25J 9/1674;**
G05B 2219/37537; G05B 2219/39218;
G05B 2219/39224; G05B 2219/40332;
G05B 2219/40333; G05B 2219/40599

(86) Internationale Anmeldenummer:
**PCT/EP2021/081321**

(87) Internationale Veröffentlichungsnummer:
**WO 2022/128270 (23.06.2022 Gazette 2022/25)**

(54) **VERFAHREN UND SYSTEM ZUM BETREIBEN EINES ROBOTERS**

METHOD AND SYSTEM FOR OPERATING A ROBOT

PROCÉDÉ ET SYSTÈME DE FONCTIONNEMENT D'UN ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **15.12.2020  DE 102020215904**

(43) Veröffentlichungstag der Anmeldung:
**25.10.2023  Patentblatt 2023/43**

(73) Patentinhaber: **KUKA Deutschland GmbH**
**86165 Augsburg (DE)**

(72) Erfinder:
• **BONIN, Uwe**
**86161 Augsburg (DE)**

• **SCHIMMEL, Dennis**
**86165 Augsburg (DE)**
• **UEBERLE, Marc-Walter**
**86316 Friedberg (DE)**
• **MILIGHETTI, Giulio**
**86165 Augsburg (DE)**
• **GROSCHUP, Florian**
**86152 Augsburg (DE)**

(74) Vertreter: **Oelke, Jochen**
**KUKA Aktiengesellschaft**
**Zugspitzstraße 140**
**86165 Augsburg (DE)**

(56) Entgegenhaltungen:
**DE-B3- 102019 118 263**

**Beschreibung**

Die vorliegende Erfindung betrifft ein Verfahren zum Betreiben eines Roboters sowie ein System und ein Computerprogrammprodukt zur Durchführung des Verfahrens.

Bei Robotern transformiert eine transponierte Jacobimatrix J, die sich aus der Differentiation einer Geschwindigkeit einer roboterfesten Referenz nach Gelenkgeschwindigkeiten ergibt, Lasten *f* an einer roboterfesten Referenz, beispielsweise dem TCP, und dadurch bewirkte Gelenklasten $\tau$ ineinander:

$$\tau = J^{\mathrm{T}} \cdot f$$

Dies erlaubt prinzipiell umgekehrt die Ermittlung äußerer Lasten auf Basis von erfassten Gelenklasten und somit insbesondere die Überwachung des Roboters während einer Bewegung auf Kollisionen, insbesondere (Ein)Quetschsituationen, an der Referenz durch Überwachen von entsprechenden Lastgrenzwerten und dergleichen.

In der Nähe von singulären Stellungen des Roboters wird die Jacobimatrix jedoch schlecht konditioniert, in singulären Stellungen ergibt sich ein Rangabfall, so dass in der Nähe von singulären Stellungen, insbesondere aufgrund von Messrauschen, numerischen Effekten und dergleichen, die Präzision der Ermittlung äußerer Lasten auf Basis von erfassten Gelenklasten beeinträchtigt werden kann.

DE 10 2017 204 211 A1 schlägt daher heuristisch vor, Gelenke nur noch einzeln zu rotieren, wenn ein Roboter in der Nähe einer singulären Konfiguration "gewesen ist".

Dies schränkt jedoch die Bewegungsmöglichkeiten massiv ein.

DE 10 2019 118 263 B3 offenbart ein Verfahren, bei dem einem Anwender eines Robotermanipulators, insbesondere beim manuellen Führen des Robotermanipulators, angezeigt wird, in welchen Richtungen eine auf den Robotermanipulator aufgebrachte, externe Kraft von Drehmomentsensoren des Robotermanipulators mit welcher Güte erfasst werden kann.

Aufgabe der vorliegenden Erfindung ist es, den Betrieb eines Roboters zu verbessern.

Diese Aufgabe wird durch ein Verfahren mit den Merkmalen des Anspruchs 1 gelöst.

Ansprüche 9, 10 stellen ein System bzw. Computerprogrammprodukt zur Durchführung eines hier beschriebenen Verfahrens unter Schutz, die Unteransprüche betreffen vorteilhafte Weiterbildungen.

Nach einer Ausführung der vorliegenden Erfindung erfolgt die Anzeige der wenigstens einen ersten Richtung durch das Anzeigen als solches oder eine entsprechende Identifikation, beispielsweise Farbgebung oder dergleichen.

Nach einer Ausführung der vorliegenden Erfindung wird beim Durchführen einer Bewegung einer roboterfesten Referenz eines Roboters wenigstens eine Richtung, die ohne Beschränkung der Allgemeinheit, insbesondere ohne notwendig eine erste Richtung vorauszusetzen, als zweite Richtung bezeichnet wird, in einer Ausführung durch das Anzeigen als solches oder eine entsprechende Identifikation, beispielsweise (gegebenenfalls andere) Farbgebung oder dergleichen, als auf Basis von erfassten Gelenklasten überwachbar angezeigt, in der eine äußere Last an der Referenz trotz einer Nähe zu einer singulären Stellung des Roboters auf Basis von erfassten Gelenklasten zuverlässig detektierbar ist bzw. für die ermittelt worden ist, dass eine äußere Last an der Referenz trotz einer Nähe zu einer singulären Stellung des Roboters auf Basis von erfassten Gelenklasten zuverlässig detektierbar ist, insbesondere falls ermittelt worden ist, dass eine äußere Last an der Referenz in dieser zweiten Richtung trotz einer Nähe zu einer singulären Stellung des Roboters auf Basis von erfassten Gelenklasten zuverlässig detektierbar ist.

Dadurch kann in einer Ausführung beim Planen der Bewegung geprüft werden, ob eine nicht zuverlässig detektierte bzw. detektierbare äußere Last in einer bestimmten Richtung ein (zu hohes) Risiko darstellen würde und in einer Ausführung die Bewegung und/oder Umgebung entsprechend umplanen, oder aber akzeptierbar ist, da beispielsweise in dieser Richtung genug Ausweichraum vorhanden ist, um ein Einquetschen auszuschließen, in dieser Richtung keine Hindernisse vorhanden sind bzw. sein können oder dergleichen.

Auf diese Weise können in einer Ausführung mehr Bewegungsmöglichkeiten des Roboters genutzt und/oder die Sicherheit erhöht und dadurch der Betrieb des Roboters verbessert werden.

Analog kann während des Durchführens der Bewegung berücksichtigt werden, dass in einer bestimmten Richtung äußere Last nicht zuverlässig detektiert werden (können), und während des Betriebs entschieden werden, ob diese Richtung, beispielsweise aufgrund ausreichenden Ausweichraums, fehlender Hindernisse oder dergleichen, trotzdem genutzt oder aber vermieden wird.

Auf diese Weise können in einer Ausführung mehr Bewegungsmöglichkeiten des Roboters genutzt und/oder die Sicherheit erhöht und dadurch der Betrieb des Roboters verbessert werden.

Der Roboter weist in einer Ausführung wenigstens einen Roboterarm und/oder wenigstens drei, insbesondere wenigstens sechs, in einer Ausführung wenigstens sieben, Gelenke, in einer Ausführung Drehgelenke, insbesondere also einen Roboterarm mit wenigstens drei, insbesondere wenigstens sechs, in einer Ausführung wenigstens sieben, Gelenken, in einer Ausführung Drehgelenken, auf.

Hierfür ist die vorliegende Erfindung, insbesondere aufgrund der möglichen Einsatzzwecke und Singularitäten, besonders geeignet.

In einer Ausführung werden

- wenigstens zwei erste Richtungen, in einer Ausführung durch das Anzeigen als solches oder eine entsprechende Identifikation, beispielsweise Farbgebung oder dergleichen, als nicht auf Basis von erfassten Gelenklasten überwacht angezeigt, in denen jeweils eine äußere Last an der Referenz aufgrund einer Nähe zu einer singulären Stellung des Roboters auf Basis von erfassten Gelenklasten nicht zuverlässig detektierbar ist bzw. für die ermittelt worden ist, dass eine äußere Last an der Referenz aufgrund einer Nähe zu einer singulären Stellung des Roboters auf Basis von erfassten Gelenklasten nicht zuverlässig detektierbar ist, insbesondere falls ermittelt worden ist, dass eine äußere Last an der Referenz in diesen ersten Richtungen aufgrund einer Nähe zu einer singulären Stellung des Roboters auf Basis von erfassten Gelenklasten nicht zuverlässig detektierbar ist;
und/oder

- wenigstens zwei zweite Richtungen, in einer Ausführung durch das Anzeigen als solches oder eine entsprechende Identifikation, beispielsweise (gegebenenfalls andere) Farbgebung oder dergleichen, als auf Basis von erfassten Gelenklasten überwachbar angezeigt, in denen jeweils eine äußere Last an der Referenz trotz einer Nähe zu einer singulären Stellung des Roboters auf Basis von erfassten Gelenklasten zuverlässig detektierbar ist bzw. für die ermittelt worden ist, dass eine äußere Last an der Referenz trotz einer Nähe zu einer singulären Stellung des Roboters auf Basis von erfassten Gelenklasten zuverlässig detektierbar ist, insbesondere falls ermittelt worden ist, dass eine äußere Last an der Referenz in diesen zweiten Richtungen trotz einer Nähe zu einer singulären Stellung des Roboters auf Basis von erfassten Gelenklasten zuverlässig detektierbar ist.

Dadurch können in einer Ausführung komplexere Bewegungen in einer Nähe zu einer singulären Stellung besser, insbesondere sicherer, geplant bzw. durchgeführt und dadurch der Betrieb des Roboters (weiter) verbessert werden.

In einer Ausführung wird/werden nur die erste(n) Richtung(en) angezeigt, beispielsweise durch Aktivieren entsprechender Leuchtmittel oder Symbole oder dergleichen, so dass durch die Anzeige als solches diese Richtung(en) als nicht auf Basis von erfassten Gelenklasten überwacht angezeigt wird/werden.

In einer anderen Ausführungen werden sowohl erste als auch zweite Richtung(en) angezeigt, beispielsweise durch Aktivieren entsprechender Leuchtmittel oder Symbole oder dergleichen, wobei dann zusätzlich durch eine entsprechende Identifikation, beispielsweise unterschiedliche Farbgebung, Leuchtmittel, Symbole oder dergleichen, die jeweilige(n) Richtung(en) jeweils als nicht auf Basis von erfassten Gelenklasten überwacht oder auf Basis von erfassten Gelenklasten überwachbar angezeigt wird/werden, rein exemplarisch zum Beispiel nicht auf Basis von erfassten Gelenklasten überwachte bzw. erste Richtung(en) in einer Warnfarbe, beispielsweise rot, oder mit gestrichelten oder unausgefüllten Symbolen oder dergleichen, und auf Basis von erfassten Gelenklasten überwachbare bzw. zweite Richtung(en) in einer anderen Farbe, zum Beispiel grün, blau, weiß, oder mit durchgezogenen oder ausgefüllten Symbolen oder dergleichen.

Zwei oder mehr erste Richtungen bzw. zwei oder mehr zweite Richtungen können (jeweils) einen zwei-, drei- oder mehrdimensionalen Hyperraum, beispielsweise zwei Richtungen einen Hyperraum in Form einer Ebene, definieren, insbesondere den (Hyper) Raum möglicher Linearkombinationen der Richtungen. In einer Ausführung kann ein Anzeigen von zwei oder mehr ersten Richtungen und/oder ein Anzeigen von zwei oder mehr zweiten Richtungen ein Anzeigen des entsprechenden Raums selber umfassen, insbesondere sein, beispielweise eine grafische Visualisierung einer Ebene, die durch zwei erste bzw. zweite Richtungen aufgespannt wird.

In einer Ausführung wird eine, vorzugsweise visuelle und/oder akustische, Warnung ausgegeben, wenn eine äußere Last an der Referenz in der wenigstens einen ersten Richtung aufgrund einer Nähe zu einer singulären Stellung des Roboters auf Basis von erfassten Gelenklasten nicht zuverlässig detektierbar ist.

Hierdurch kann in einer Ausführung die Aufmerksamkeit eines Anwenders auf die als nicht auf Basis von erfassten Gelenklasten überwacht angezeigte(n) Richtung(en) gelenkt und dadurch insbesondere die Sicherheit erhöht und so der Betrieb des Roboters (weiter) verbessert werden.

In einer Ausführung wird/werden die wenigstens eine erste Richtung, in einer Weiterbildung die wenigstens zwei ersten Richtungen, am Roboter angezeigt, in einer Ausführung visualisiert, beispielsweise durch entsprechende Leuchtmittel in der (jeweiligen) Richtung, Farbgebung oder dergleichen.

Zusätzlich oder alternativ wird/werden in einer Ausführung die wenigstens eine zweite Richtung, in einer Weiterbildung die wenigstens zwei zweiten Richtungen, am Roboter angezeigt, in einer Ausführung visualisiert, beispielsweise durch entsprechende Leuchtmittel in der (jeweiligen) Richtung, Farbgebung oder dergleichen.

Zusätzlich oder alternativ wird in einer Ausführung die Warnung am Roboter, insbesondere visuell und/oder akustisch, ausgegeben, in einer Ausführung angezeigt.

Hierdurch kann in einer Ausführung die Sicherheit erhöht und so der Betrieb des Roboters (weiter) verbessert werden.

Zusätzlich oder alternativ wird/werden in einer Ausführung die wenigstens eine erste Richtung, in einer Weiterbildung die wenigstens zwei ersten Richtungen, und/oder die wenigstens eine zweite Richtung, in einer Weiterbildung die wenigstens zwei zweiten Richtungen, und/oder die Warnung an einem, vorzugsweise tragbaren, Bediengerät, in einer Ausführung Handbediengerät, zum Steuern des Roboters ausgegeben, insbesondere angezeigt, in einer Ausführung graphisch visualisiert, beispielsweise durch Pfeile und/oder Leuchtmittel und/oder mithilfe von Animationen bzw.

Darstellungen des Roboters oder dergleichen. In einer Ausführung kommuniziert das Bediengerät zum Steuern des Roboters mit diesem bzw. einer Robotersteuerung, insbesondere leitungsgebunden oder drahtlos, bzw. ist hierzu eingerichtet bzw. wird hierzu verwendet.

Hierdurch kann in einer Ausführung die Ergonomie und so der Betrieb des Roboters (weiter) verbessert werden.

Zusätzlich oder alternativ wird/werden in einer Ausführung die wenigstens eine erste Richtung, in einer Weiterbildung die wenigstens zwei ersten Richtungen, und/oder die wenigstens eine zweite Richtung, in einer Weiterbildung die wenigstens zwei zweiten Richtungen, und/oder die Warnung in einer Simulationsumgebung zum Simulieren der Bewegung ausgegeben, insbesondere angezeigt, in einer Ausführung graphisch visualisiert, beispielsweise durch Pfeile und/oder mithilfe von Animationen bzw. Darstellungen des Roboters oder dergleichen.

Hierdurch kann in einer Ausführung die Sicherheit erhöht und so der Betrieb des Roboters (weiter) verbessert werden.

In einer Ausführung ist bzw. wird bei der Bewegung der Referenz eine Überwachung einer äußeren Last an der Referenz in der wenigstens einen zweiten Richtung, in einer Weiterbildung in den wenigstens zwei zweiten Richtungen, vorgesehen, insbesondere implementiert bzw. durchgeführt.

Hierdurch kann in einer Ausführung die Sicherheit erhöht und so der Betrieb des Roboters (weiter) verbessert werden.

Nach einer Ausführung der vorliegenden Erfindung, die mit dem oben beschriebenen Aspekt der Anzeige kombiniert oder wie diese eigenständig realisiert sein kann, wird beim Durchführen einer bzw. der Bewegung einer bzw. der roboterfesten Referenz eines bzw. des Roboters wenigstens eine bzw. die wenigstens eine erste Richtung gesperrt, falls (ermittelt wird, dass) eine äußere Last an der Referenz in dieser Richtung aufgrund einer Nähe zu einer singulären Stellung des Roboters auf Basis von erfassten Gelenklasten nicht zuverlässig detektierbar ist, und bei der wenigstens einen gesperrten Richtung und simultaner Verstellung mehrerer Gelenke des Roboters bzw. während die wenigstens eine erste Richtung gesperrt ist und mehrerer Gelenke des Roboters simultan verstellt werden, eine Überwachung einer äußeren Last an der Referenz in wenigstens einer bzw. der wenigstens einen zweiten Richtung auf Basis von erfassten Gelenklasten vorgesehen, in einer Ausführung implementiert bzw. durchgeführt, in der eine äußere Last an der Referenz auf Basis von erfassten Gelenklasten trotz einer Nähe zu der singulären Stellung zuverlässig detektierbar ist.

Indem auch in der Nähe der singulären Stellung simultane Verstellungen mehrerer Gelenke des Roboters zugelassen und dabei eine Überwachung äußerer Lasten an der Referenz in einer oder mehreren sich daraus ergebenden zweiten Richtungen auf Basis von erfassten Gelenklasten vorgesehen ist bzw. wird, können in einer Ausführung gegenüber der DE 10 2017 204 211 A1 die Bewegungsmöglichkeiten erweitert und/oder die Sicherheit erhöht und so der Betrieb des Roboters verbessert werden.

Die beiden Aspekte der Anzeige und der Sperrung sind miteinander kombiniert, indem die erste(n) Richtung(en) sowohl angezeigt als auch gesperrt werden. Auf diese Weise kann der Benutzer einfach(er) erkennen, warum eine bestimmte Richtung aktuell nicht zur Verfügung steht.

In einer Ausführung werden wenigstens zwei erste Richtungen gesperrt, falls äußere Lasten an der Referenz in diesen Richtungen aufgrund einer Nähe zu einer singulären Stellung des Roboters auf Basis von erfassten Gelenklasten nicht zuverlässig detektierbar sind.

Zusätzlich oder alternativ ist bzw. wird in einer Ausführung bei der wenigstens einen gesperrten ersten Richtung und simultaner Verstellung mehrerer Gelenke eine Überwachung einer äußeren Last an der Referenz in wenigstens zwei zweiten Richtungen auf Basis von erfassten Gelenklasten vorgesehen, in einer Ausführung implementiert bzw. durchgeführt, in denen äußere Lasten an der Referenz auf Basis von erfassten Gelenklasten trotz einer Nähe zu der singulären Stellung zuverlässig detektierbar sind.

Dadurch können in einer Ausführung komplexere Bewegungen, bei denen aufgrund einer Nähe zu einer singulären Stellung äußere Lasten in unterschiedlichen Richtungen zuverlässig bzw. nicht zuverlässig detektierbar sind, besser, insbesondere sicherer, geplant bzw. durchgeführt und dadurch der Betrieb des Roboters (weiter) verbessert werden.

Die wenigstens eine erste Richtung bzw. eine oder mehrere der ersten Richtungen und/oder die wenigstens eine zweite Richtung bzw. eine oder mehrere der zweiten Richtungen weist in einer Ausführung eine translatorische und/oder rotatorische Richtung auf, kann also insbesondere eine Verschiebung oder eine Rotation oder eine Kombination hieraus sein.

Zusätzlich oder alternativ wird/werden in einer Ausführung die wenigstens eine erste Richtung bzw. eine oder mehrere der ersten Richtungen und/oder die wenigstens eine zweite Richtung bzw. eine oder mehrere der zweiten Richtungen auf Basis einer Jacobimatrix zwischen Geschwindigkeiten der Referenz und Gelenkgeschwindigkeiten ermittelt. In einer Ausführung entspricht die erste Richtung bzw. entsprechen die ersten Richtungen einem Nullraum, in einer Ausführung einer Nullreihe bzw. -spalte, der, insbesondere transponierten, Jacobimatrix. Bei der Ermittlung auf Basis der Jacobimatrix kann die Jacobimatrix auch in indirekter bzw. kombinierter Form verwendet werden, beispielsweise in Form einer Pseudoinversen, beispielsweise der Moore-Penrose-Pseudoinversen, der Jacobimatrix oder dergleichen.

Durch die Verwendung der Jacobimatrix können in einer Ausführung gegenüber dem heuristischen Ansatz der DE 10 2017 204 211 A1 die Bewegungsmöglichkeiten erweitert und/oder die Sicherheit erhöht und so der Betrieb des Roboters verbessert werden.

In einer Ausführung ist die Referenz eine roboterendflanschfeste Referenz, vorzugsweise der TCP. Da üblicherweise beim Betreiben von Robotern die Bewegung eines am Roboterendflansch befestigten Werkzeugs oder -stücks beabsichtigt ist und häufig der Roboterendflansch sich im Verhältnis schnell(er) bewegt und/oder eine weite(re) Auslage aufweist als andere Roboterglieder, kann die vorliegende Erfindung mit besonderem Vorteil für roboterendflanschfeste Referenzen verwendet werden.

Nach einer Ausführung der vorliegenden Erfindung ist ein System zum Betreiben eines bzw. des Roboters, insbesondere hard- und/oder software-, insbesondere programmtechnisch, zur Durchführung eines hier beschriebenen Verfahrens eingerichtet.

In einer Ausführung weist das System bzw. sein(e) Mittel auf:

Mittel zum Anzeigen von wenigstens zwei ersten Richtungen als nicht auf Basis von erfassten Gelenklasten überwacht, in denen jeweils eine äußere Last an der Referenz aufgrund einer Nähe zu einer singulären Stellung des Roboters auf Basis von erfassten Gelenklasten nicht zuverlässig detektierbar ist, und/oder von wenigstens zwei zweiten Richtungen als auf Basis von erfassten Gelenklasten überwachbar, in denen jeweils eine äußere Last an der Referenz trotz einer Nähe zu einer singulären Stellung des Roboters auf Basis von erfassten Gelenklasten zuverlässig detektierbar ist; und/oder

Mittel zum Ausgeben einer Warnung, wenn eine äußere Last an der Referenz in der wenigstens einen ersten Richtung aufgrund einer Nähe zu einer singulären Stellung des Roboters auf Basis von erfassten Gelenklasten nicht zuverlässig detektierbar ist bzw. sind; und/oder

Mittel zum Ausgeben, insbesondere Anzeigen, insbesondere graphisch Visualisieren, der wenigstens einen ersten Richtung und/oder der wenigstens einen zweite Richtung und/oder der Warnung am Roboter und/oder einem, insbesondere tragbaren, Bediengerät zum Steuern des Roboters und/oder in einer Simulationsumgebung zum Simulieren der Bewegung; und/oder

Mittel zum Überwachen einer äußeren Last an der Referenz in der wenigstens eine zweiten Richtung auf Basis von erfassten Gelenklasten; und/oder

Mittel zum Sperren von wenigstens zwei ersten Richtungen, falls äußere Lasten an der Referenz in diesen Richtungen aufgrund einer Nähe zu einer singulären Stellung des Roboters auf Basis von erfassten Gelenklasten nicht zuverlässig detektierbar sind; und/oder

Mittel zum Überwachen einer äußeren Last an der Referenz in wenigstens zwei zweiten Richtungen auf Basis von erfassten Gelenklasten, wobei in den zweiten Richtungen jeweils äußere Lasten an der Referenz auf Basis von erfassten Gelenklasten trotz einer Nähe zu der singulären Stellung zuverlässig detektierbar sind, bei der gesperrten ersten Richtung und simultaner Verstellung mehrerer Gelenke.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere den Roboter betreiben kann. Ein Computerprogrammprodukt kann in einer Ausführung ein, insbesondere nichtflüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. sein(e) Mittel.

In einer Ausführung weist das System den Roboter auf.

Eine Last umfasst in einer Ausführung eine Kraft in einer Richtung und/oder ein Drehmoment in einer Richtung.

In einer Ausführung ist eine äußeren Last an der Referenz dann aufgrund einer Nähe zu einer singulären Stellung des Roboters auf Basis von erfassten Gelenklasten nicht zuverlässig detektierbar, wenn eine Änderung der erfassten Gelenklasten infolge einer Änderung der äußere Last einen bestimmten Minimalwert unterschreitet bzw. eine Genauigkeit, mit der eine äußere Last auf Basis von erfassten, durch die äußere Last bewirkten Gelenklasten ermittelt wird bzw. werden kann, einen bestimmten Minimalwert unterschreitet bzw. eine Ungenauigkeit, mit der eine äußere Last auf Basis von erfassten, durch die äußere Last bewirkten Gelenklasten ermittelt wird bzw. werden kann, einen bestimmten Maximalwert überschreitet, bzw. eine äußere Last an der Referenz dann trotz einer Nähe zu einer singulären Stellung des Roboters auf Basis von erfassten Gelenklasten zuverlässig detektierbar, wenn eine Änderung der erfassten Gelenklasten infolge einer Änderung der äußere Last einen bestimmten Minimalwert überschreitet bzw. eine äußere Last mit einer bestimmten Genauigkeit auf Basis von erfassten, durch die äußere Last bewirkten Gelenklasten ermittelt wird bzw. werden kann bzw. eine Genauigkeit, mit der eine äußere Last auf Basis von erfassten, durch die äußere Last bewirkten Gelenklasten ermittelt wird bzw. werden kann, einen bestimmten Minimalwert überschreitet bzw. eine Ungenauigkeit, mit der eine äußere Last auf Basis von erfassten, durch die äußere Last bewirkten Gelenklasten ermittelt wird bzw. werden kann, einen bestimmten Maximalwert unterschreitet.

Eine Richtung im Sinne der vorliegenden Erfindung weist in einer Ausführung einen oder keinen Richtungssinn auf. So kann beispielsweise die (bidirektionale) Vertikale und die Gravitationsrichtung (vertikal von oben nach unten) gleichermaßen eine Richtung im Sinne der vorliegenden Erfindung sein.

Weitere Vorteile und Merkmale ergeben sich aus den Unteransprüchen und den Ausführungsbeispielen. Hierzu zeigt, teilweise schematisiert:

Fig. 1:    ein System zum Betreiben eines Roboters nach einer Ausführung der vorliegenden Erfindung; und

Fig. 2:    Verfahren zum Betreiben des Roboters nach einer Ausführung der vorliegenden Erfindung.

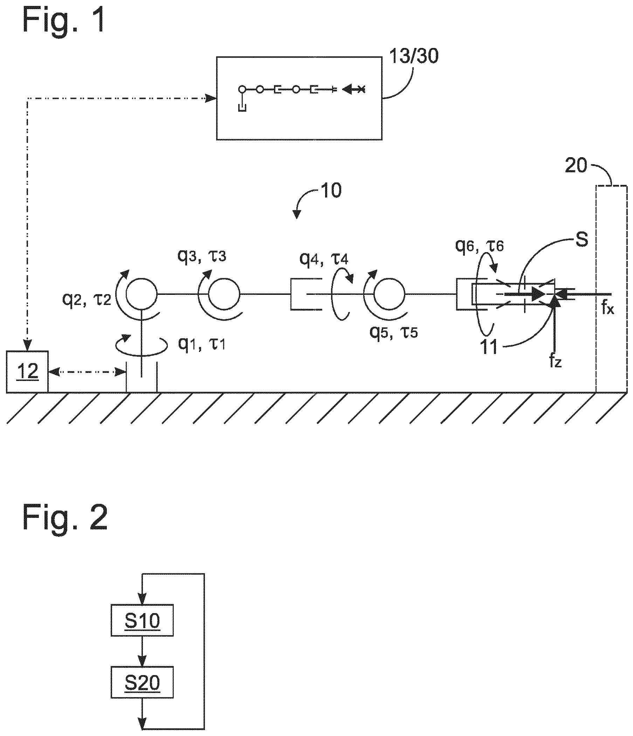

Fig. 1 zeigt exemplarisch einen sechsachsigen bzw. -gelenkigen Roboter(arm) 10, dessen Gelenkstellungen bzw. -lasten durch $q_1,..., q_6$ (Gelenkstellungen bzw. Drehwinkel) bzw. $\tau_1,..., \tau_6$ (erfasste Gelenklasten bzw. Drehmomente) angedeutet sind, wobei die Gelenkstellungen $q_1,..., q_6$ die Pose seines Endflansches und damit des TCPs 11 bestimmen.

Exemplarisch sind am TCP 11 eine äußere Last in Form einer horizontalen Kraft $f_x$, deren Wirklinie durch die Drehachsen der Gelenke verläuft, sowie eine vertikale Kraft $f_z$ angedeutet.

Mit 12 ist eine Robotersteuerung bezeichnet, mit der ein Handbediengerät 13 kommuniziert.

In der Nähe der dargestellten singulären Stellung des Roboters 10 kann die Kraft $f_x$ auf Basis der erfassten Gelenklasten $\tau_1,... , \tau_6$ nicht mehr zuverlässig detektiert werden, in der dargestellten singulären Stellung überhaupt nicht und damit auch nicht zuverlässig. Diese Kraftrichtung kann auf Basis einer Jacobimatrix zwischen Geschwindigkeiten der Referenz und Gelenkgeschwindigkeiten ermittelt werden, da die entsprechende (erste) Spalte der transponierten Jacobimatrix $J^T$ in der singulären Stellung Nullen aufweist, da eine Kraft $f_x$ in keinem der Gelenke ein von Null verschiedenes Drehmoment bewirkt.

Hingegen kann trotz Nähe zu der dargestellten singulären Stellung des Roboters 10 die Kraft $f_z$ auf Basis der erfassten Gelenklasten $\tau_1,..., \tau_6$ noch zuverlässig detektiert werden, auch in der dargestellten singulären Stellung. Auch diese Richtung kann auf Basis der Jacobimatrix ermittelt werden, da die entsprechende (dritte) Spalte der transponierten Jacobimatrix $J^T$ in der singulären Stellung nicht nur Nullen aufweist, da die Kraft $f_z$ von Null verschiedene Drehmomente im zweiten, dritten und fünften Gelenk bewirkt.

Die Robotersteuerung 12 ermittelt jeweils auf Basis einer aktuellen Stellung des Roboters die Jacobimatrix (Fig. 2: Schritt S10) und hieraus diejenigen (ersten) Richtungen, in denen äußere Lasten an der Referenz 11 aufgrund einer Nähe zu einer singulären Stellung des Roboters auf Basis von erfassten Gelenklasten $\tau_1,..., \tau_6$ nicht zuverlässig detektierbar sind.

Diese ersten Richtungen werden dann in einem Schritt S20 als nicht auf Basis von erfassten Gelenklasten überwacht angezeigt, vorzugsweise am Roboter, wie in Fig. 1 durch ein entsprechend( aktiviert)es Leuchtmittel S angedeutet, und/oder am Handbediengerät 13, wie in Fig. 1 durch eine entsprechende graphische Visualisierung angedeutet. Zusätzlich kann beispielsweise eine visuelle und/oder akustische Warnung ausgegeben werden, vorzugsweise am Roboter und/oder Handbediengerät.

Auf diese Weise kann ein Anwender erkennen, dass Kräfte in horizontaler Richtung in der Nähe der in Fig. 1 gezeigten Stellung auf Basis von erfassten Gelenklasten nicht zuverlässig detektierbar sind.

Sofern dies unproblematisch ist, kann er gleichwohl eine Bewegung in (einer) der ersten Richtung(en) kommandieren (im Ausführungsbeispiel ist dies nur in Stellungen möglich, die noch geringfügig von der gezeigten singulären Stellung abweichen).

Stellt er jedoch beispielsweise fest, dass in der entsprechenden Richtung ein Hindernis 20 vorhanden ist, so besteht die Möglichkeit, dass der Roboter mit dem Hindernis 20 kollidiert, ohne dass eine Kollisionsüberwachung dies bemerkt, die äußere Lasten am TCP 11 auf Basis der erfassten Gelenklasten $\tau_1,..., \tau_6$ ermittelt und auf das Überschreiten von Grenzwerten überwacht.

In Schritt S20 wird die erste Richtung nicht nur angezeigt, sondern zusätzlich gesperrt, so dass der Anwender in der Nähe der in Fig. 1 gezeigten Stellung keine Bewegung des TCPs 11 in horizontaler Richtung kommandieren kann.

In anderen, zweiten Richtungen wird dabei eine Überwachung äußerer Lasten am TCP durchgeführt, während die erste Richtung gesperrt ist und mehrere Gelenke des Roboters simultan verstellt werden. So illustriert exemplarisch der Vergleich der Fig. 1 mit den Fig. 3, 4 der DE 10 2017 204 211 A1, dass die Gelenke 2, 3 und 5 simultan verstellt werden können, da die Kraft in der zweiten Richtung $f_z$ trotz Nähe zur singulären Stellung zuverlässig detektiert werden kann, und dadurch die Bewegungsmöglichkeiten gegenüber der DE 10 2017 204 211 A1 deutlich erweitert werden können.

Zusätzlich oder alternativ zur Anzeige erster Richtungen können in einer nicht dargestellten Abwandlung auch zweite Richtungen, in denen äußere Lasten an der Referenz auf Basis von erfassten Gelenklasten trotz einer Nähe zu der singulären Stellung zuverlässig detektierbar sind, als auf Basis von erfassten Gelenklasten überwachbar angezeigt (und vorzugsweise überwacht) werden, beispielsweise analog zum Symbol S am Roboter 10 bzw. analog zur graphischen Visualisierung am Handbediengerät 13 bzw. in der Simulationsumgebung 30. Wie an anderer Stelle erläutert, kann es vorteilhaft sein, nur die ersten oder nur die zweiten Richtungen anzuzeigen. Gleichermaßen können auch sowohl ersten als auch zweite Richtungen angezeigt werden, rein exemplarisch in unterschiedlichen Farben, vorzugsweise ersten Richtungen in einer Warnfarbe.

Bezugszeichenliste

| | |
|---|---|
| 10 | Roboter(arm) |
| 11 | TCP (roboter(endflansch)feste Referenz) |
| 12 | Robotersteuerung |
| 13 | Bediengerät |
| 20 | Hindernis |
| 30 | Simulationsumgebung |
| S | Leuchtmittel |
| $q_1,..., q_6$ | Gelenkstellungen |
| $\tau_1,..., \tau_6$ | (erfasste) Gelenklasten |
| $f_x, f_z$ | Kraft (äußere Last) |

**Patentansprüche**

1. Verfahren zum Betreiben eines Roboters (10), wobei beim Durchführen einer Bewegung einer roboterfesten Referenz (11) wenigstens eine erste, aus einer auf Basis einer aktuellen Stellung des Roboters (10) ermittelten Jakobimatrix ermittelten erste Richtung, in der eine äußere Last ($f_x$) an der Referenz aufgrund einer Nähe zu einer singulären Stellung des Roboters auf Basis von erfassten Gelenklasten ($\tau_1,..., \tau_6$) nicht zuverlässig detektierbar ist, als nicht auf Basis von erfassten Gelenklasten überwacht angezeigt (S20) und gesperrt wird, so dass ein Anwender in der Nähe der singulären Stellung keine Bewegung der roboterfesten Referenz (11) in die erste Richtung kommandieren kann.

2. Verfahren nach Anspruch 1, **dadurch gekennzeichnet, dass** wenigstens zwei erste Richtungen als nicht auf Basis von erfassten Gelenklasten überwacht angezeigt werden, in denen jeweils eine äußere Last an der Referenz aufgrund einer Nähe zu einer singulären Stellung des Roboters auf Basis von erfassten Gelenklasten nicht zuverlässig detektierbar ist; und/oder wenigstens zwei zweite Richtungen als auf Basis von erfassten Gelenklasten überwachbar angezeigt werden, in denen jeweils eine äußere Last an der Referenz trotz einer Nähe zu einer singulären Stellung des Roboters auf Basis von erfassten Gelenklasten zuverlässig detektierbar ist.

3. Verfahren nach einem der vorhergehenden Ansprüche, **dadurch gekennzeichnet, dass** eine Warnung ausgegeben wird (S20), wenn eine äußere Last an der Referenz in der wenigstens einen ersten Richtung aufgrund einer Nähe zu einer singulären Stellung des Roboters auf Basis von erfassten Gelenklasten nicht zuverlässig detektierbar ist.

4. Verfahren nach einem der vorhergehenden Ansprüche, **dadurch gekennzeichnet, dass** die wenigstens eine erste Richtung und/oder die wenigstens eine zweite Richtung und/oder die Warnung am Roboter und/oder einem, insbesondere tragbaren, Bediengerät (13) zum Steuern des Roboters und/oder in einer Simulationsumgebung (30) zum Simulieren der Bewegung, ausgegeben, insbesondere angezeigt, insbesondere graphisch visualisiert, wird.

5. Verfahren nach einem der vorhergehenden Ansprüche, **dadurch gekennzeichnet, dass** bei der Bewegung der Referenz eine Überwachung einer äußeren Last an der Referenz in der wenigstens einen zweiten Richtung auf Basis von erfassten Gelenklasten vorgesehen ist.

6. Verfahren zum Betreiben eines Roboters (10) nach einem der vorhergehenden Ansprüche, wobei **bei der** wenigstens einen gesperrten Richtung und simultaner Verstellung mehrerer Gelenke des Roboters eine Überwachung einer äußeren Last ($f_z$) an der Referenz in wenigstens einer zweiten Richtung auf Basis von erfassten Gelenklasten ($\tau_1,..., \tau_6$) vorgesehen ist, in der eine äußere Last an der Referenz auf Basis von erfassten Gelenklasten trotz einer Nähe zu der singulären Stellung zuverlässig detektierbar ist.

7. Verfahren nach dem vorhergehenden Anspruch, **dadurch gekennzeichnet, dass** wenigstens zwei erste Richtungen gesperrt werden, falls äußere Lasten an der Referenz in diesen Richtungen aufgrund einer Nähe zu einer singulären Stellung des Roboters auf Basis von erfassten Gelenklasten nicht zuverlässig detektierbar sind, und/oder bei der wenigstens einen gesperrten ersten Richtung und simultaner Verstellung mehrerer Gelenke eine Überwachung einer äußeren Last an der Referenz in wenigstens zwei zweiten Richtungen auf Basis von erfassten Gelenklasten vorgesehen ist, und in denen äußere Lasten an der Referenz auf Basis von erfassten Gelenklasten trotz einer Nähe zu der singulären Stellung zuverlässig detektierbar sind.

8. Verfahren nach einem der vorhergehenden Ansprüche, **dadurch gekennzeichnet, dass** die wenigstens eine erste Richtung und/oder die wenigstens eine zweite Richtung eine translatorische und/oder rotatorische Richtung aufweist und/oder auf Basis einer Jacobimatrix zwischen Geschwindigkeiten der Referenz und Gelenkgeschwindigkeiten ermittelt wird (S10) und/oder die Referenz eine roboterendflanschfeste Referenz ist.

9. System zum Betreiben eines Roboters (10), das zur Durchführung eines Verfahrens nach einem der vorhergehenden Ansprüche eingerichtet ist**.**

10. Computerprogrammprodukt mit einem Programmcode, der auf einem von einem Computer lesbaren Medium gespeichert und zur Durchführung eines Verfahrens nach einem der Ansprüche 1-8 eingerichtet ist.

**Claims**

1. Method for operating a robot (10), wherein, when carrying out a movement of a reference (11) that is fixed to the robot, at least a first direction determined from a Jacobian matrix determined on the basis of a current position of the robot (10), in which direction an external load ($f_x$) at the reference cannot be reliably detected on the basis of detected joint loads ($\tau_1,...,\tau_6$) due to a proximity to a singular position of the robot, is displayed (S20) as not being monitored on the basis of detected joint loads and is blocked, so that a user cannot command movement of the reference (11) that is fixed to the robot in the first direction in the vicinity of the singular position.

2. Method according to Claim 1, **characterized in that** at least two first directions are displayed as not being monitored on the basis of detected joint loads, in each of which directions an external load at the reference cannot be reliably detected on the basis of detected joint loads due to a proximity to a singular position of the robot; and/or at least two second directions are displayed as being monitorable on the basis of detected joint loads, in each of which directions an external load at the reference can be reliably detected on the basis of detected joint loads despite a proximity to a singular position of the robot.

3. Method according to either of the preceding claims, **characterized in that** a warning is issued (S20) when an external load at the reference in the at least one first direction cannot be reliably detected on the basis of detected joint loads due to a proximity to a singular position of the robot.

4. Method according to any of the preceding claims, **characterized in that** the at least one first direction and/or the at least one second direction and/or the warning are/is output, in particular displayed, in particular graphically visualized, on the robot and/or an, in particular portable, operating device (13) for controlling the robot and/or in a simulation environment (30) for simulating the movement.

5. Method according to any of the preceding claims, **characterized in that**, during the movement of the reference, an external load at the reference in the at least one second direction is monitored on the basis of detected joint loads.

6. Method for operating a robot (10) according to any of the preceding claims, wherein, given the at least one blocked direction and simultaneous adjustment of several joints of the robot, an external load ($f_z$) at the reference in at least one second direction is monitored on the basis of detected joint loads ($\tau_1,...,\tau_6$), in which direction an external load at the reference can be reliably detected on the basis of detected joint loads despite a proximity to the singular position.

7. Method according to the preceding claim, **characterized in that** at least two first directions are blocked if external loads at the reference in these directions cannot be reliably detected on the basis of detected joint loads due to a proximity to a singular position of the robot, and/or, given the at least one blocked first direction and simultaneous adjustment of several joints, an external load at the reference in at least two second directions is monitored on the basis of detected joint loads, and in these directions external loads at the reference can be reliably detected on the basis of detected joint loads despite a proximity to the singular position.

8. Method according to any of the preceding claims, **characterized in that** the at least one first direction and/or the at least one second direction have/has a translational and/or rotational direction and/or are/is determined (S10) on the basis of a Jacobian matrix between velocities of the reference and joint velocities and/or the reference is a reference that is fixed to a robot end flange.

9. System for operating a robot (10), which is designed for carrying out a method according to any of the preceding claims.

10. Computer program product containing a program code, which is stored on a computer-readable medium and is designed for carrying out a method according to any of Claims 1-8.

**Revendications**

1. Procédé pour faire fonctionner un robot (10), dans lequel, lors de l'exécution d'un mouvement d'une référence (11) solidaire du robot, au moins une première direction, déterminée à partir d'une matrice jacobienne déterminée sur la base d'une position actuelle du robot (10) et dans laquelle une charge externe ($f_x$) agissant sur la référence ne peut pas être détectée de manière fiable sur la base de charges articulaires détectées ($\tau_1,..., \tau_6$) en raison de la proximité d'une position singulière du robot, est affichée (S20) comme n'étant pas surveillée sur la base de charges articulaires détectées et est bloquée, de sorte qu'un utilisateur ne puisse pas commander un mouvement de la référence (11) solidaire du robot dans la première direction à proximité de la position singulière.

2. Procédé selon la revendication 1, **caractérisé en ce qu'**au moins deux premières directions sont affichées comme n'étant pas surveillées sur la base de charges articulaires détectées, dans lesquelles une charge externe agissant sur la référence ne peut pas être respectivement détectée de manière fiable sur la base de charges articulaires détectées en raison de la proximité d'une position singulière du robot ; et/ou au moins deux secondes directions sont affichées comme pouvant être surveillées sur la base de charges articulaires détectées, dans lesquelles une charge externe agissant sur la référence peut être respectivement détectée de manière fiable sur la base de charges articulaires détectées malgré la proximité d'une position singulière du robot.

3. Procédé selon l'une quelconque des revendications précédentes, **caractérisé en ce qu'**un avertissement est émis (S20) lorsqu'une charge externe agissant sur la référence ne peut pas être détectée de manière fiable sur la base de charges articulaires détectées dans ladite au moins une première direction en raison de la proximité d'une position singulière du robot.

4. Procédé selon l'une quelconque des revendications précédentes, **caractérisé en ce que** ladite au moins une première direction et/ou ladite au moins une seconde direction et/ou l'avertissement est/sont émis(es), en particulier affiché(es), en particulier visualisé(es) graphiquement, sur le robot et/ou sur un dispositif de commande (13) destiné à commander le robot, en particulier portable, et/ou dans un environnement de simulation (30) destiné à simuler le mouvement.

5. Procédé selon l'une quelconque des revendications précédentes, **caractérisé en ce que**, lors du mouvement de la référence, il est prévu une surveillance d'une charge externe agissant sur la référence, sur la base de charges articulaires détectées, dans ladite au moins une seconde direction.

6. Procédé pour faire fonctionner un robot (10) selon l'une quelconque des revendications précédentes, dans lequel, lorsque ladite au moins une direction est bloquée et lors d'un actionnement simultané de plusieurs articulations du robot, il est prévu une surveillance d'une charge externe ($f_z$) agissant sur la référence, sur la base de charges articulaires ($\tau_1,..., \tau_6$) détectées, dans au moins une seconde direction, dans laquelle une charge externe agissant sur la référence peut être détectée de manière fiable sur la base de charges articulaires détectées malgré la proximité de la position singulière.

7. Procédé selon la revendication précédente, **caractérisé en ce qu'**au moins deux premières directions sont bloquées dans le cas où des charges externes agissant sur la référence dans ces directions ne peuvent pas être détectées de manière fiable sur la base de charges articulaires détectées en raison de la proximité d'une position singulière du robot, et/ou lorsque ladite au moins une première direction est bloquée et lors d'un actionnement simultané de plusieurs articulations, il est prévu une surveillance d'une charge externe agissant sur la référence, sur la base de charges articulaires détectées, dans au moins deux secondes directions, dans lesquelles des charges externes agissant sur la référence peuvent être détectées de manière fiable sur la base de charges articulaires détectées malgré la proximité de la position singulière.

8. Procédé selon l'une quelconque des revendications précédentes, **caractérisé en ce que** ladite au moins une première direction et/ou ladite au moins une seconde direction présente(nt) une direction de translation et/ou de rotation et/ou est/sont déterminée(s) (S10) sur la base d'une matrice jacobienne entre les vitesses de la référence et les vitesses d'articulation et/ou la référence est une référence solidaire de la bride d'extrémité du robot.

9. Système pour faire fonctionner un robot (10), qui est conçu pour mettre en œuvre un procédé selon l'une quelconque des revendications précédentes.

**10.** Produit programme d'ordinateur comprenant un code de programme qui est enregistré sur un support lisible par ordinateur et est conçu pour mettre en œuvre un procédé selon l'une quelconque des revendications **1-8.**

EP 4 263 149 B1

**Fig. 1**

$q_2, \tau_2$  $q_3, \tau_3$  $q_4, \tau_4$  $q_5, \tau_5$  $q_6, \tau_6$  S

$q_1, \tau_1$  11  $f_z$  $f_x$

13/30  10  20  12

**Fig. 2**

S10

S20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017204211 A1
- DE 102019118263 B3